# EUROPEAN PATENT SPECIFICATION

(11) **EP 2 757 334 B1**
(45) Date of publication and mention of the grant of the patent: **23.01.2019**
(21) Application number: 11872193.5
(22) Date of filing: 30.12.2011
(51) Int. Cl.: F25D 17/04, F28F 17/00, F25D 21/08, F25B 39/02, F28D 1/047

(54) **REFRIGERATOR AND METHOD OF CONTROLLING HUMIDITY IN A REFRIGERATING CHAMBER OF REFRIGERATOR**
KÜHLSCHRANK UND VERFAHREN ZUR FEUCHTIGKEITSREGELUNG FÜR DIE KÜHLKAMMER EINES KÜHLSCHRANKS
RÉFRIGÉRATEUR ET PROCÉDÉ DE RÉGULATION DE L'HUMIDITÉ POUR CHAMBRE FRIGORIFIQUE DE RÉFRIGÉRATEUR

(30) Priority: 14.09.2011 CN 201110270496
(43) Date of publication of application: 23.07.2014
(73) Proprietor: Hefei Midea Refrigerator Co., Ltd., Hefei, Anhui 230601 (CN); Hefei Hualing Co., Ltd., Hefei, Anhui 230601 (CN)
(72) Inventor: FANG, Zhongcheng, Hefei Anhui 230601 (CN); WU, Tingbo, Hefei Anhui 230601 (CN); JIANG, Mingbo, Hefei Anhui 230601 (CN); ZONG, Zhaomeng, Hefei Anhui 230601 (CN); JIN, Yongzhe, Hefei Anhui 230601 (CN); FU, Xiuliang, Hefei Anhui 230601 (CN)
(74) Representative: Maiwald Patent- und Rechtsanwaltsgesellschaft mbH
(86) International application number: PCT/CN2011/085089
(87) International publication number: WO 2013/037176

(56) References cited:
- EP-A2- 1 959 215
- CN-A- 101 509 718
- CN-A- 101 586 898
- CN-A- 101 937 247
- CN-A- 102 135 359
- JP-A- H0 293 278
- JP-A- 2002 195 714
- US-A1- 2007 095 089

## Description

### BACKGROUND OF THE INVENTION

### Technical Field

Embodiments of the present invention generally relate to refrigeration field, more particularly, to a refrigerator and a method of controlling humidity in a refrigerating chamber of a refrigerator.

### Description of the Related Art

Refrigerators in the related art cool foods indirectly via forced convection circulation by a fan. Because cooling air circulates within the refrigerator, moisture in the foods is taken away by the cooling air and frosted on the evaporator, thus the highest humidity in the refrigerating chamber is no more than 75% RH, and the average humidity is merely maintained at about 50% RH or even lower.

When the drying loss (weight loss) of most fruits and vegetables is more than 5%, obvious symbols of freshness decreasing, such as wilting, will occur. Especially for fruit, when the drying loss reaches 5%, it will not be restorable.

With evaporation of moisture in fruits and vegetables, on one hand, a part of the moisture is lost due to plant respiration, on the other hand, a humidity of storage environment is too low, so that the food is easy to be dehydrated and air-dried, which causes the fruits and vegetables to wilt. Therefore, in order to improve the freshness of the fruits and vegetables, the average humidity of the refrigerating chamber should be maintained about between 80% and 90%.

A temperature of the refrigerating chamber of the refrigerator in the related art is low, so that the high humidity and retaining freshness requirements of the fruits and vegetables can not be achieved, the fruit and vegetables are easily wilted and the edibleness thereof are decreased or lost.

JP 2002195714A provides a storage method and device for storing unpolished rice under optimum conditions in a storehouse for storing grain or the like at a low temperature. A compressor 11 is started only in prescribed time M1 after stopping, a circulation fan 17 is stopped after being delayed from the stop of the compressor 11 by a prescribed time M3, and the delay time M3 of the circulation fan 17 is set shorter than the minimum stop time M1 of the compressor 11. Also, the operation is executed once per several times, when the compressor 11 stops. Then, the circulation fan 17 is driven intermittently at least once, until the compressor 11 is restarted. By increasing the relative working rate of the circulation fan 17, humidity can be maintained in the middle of low humidity and high humidity.

JP H0293278 discloses a method to humidify the storage space of a refrigerator without using a humidifier by disposing an absorbent object comprising a porous molded piece which absorbs the frost melt on the bottom of the cooling chamber.

EP 1959215 relates to a method for controlling the humidity inside a refrigerator having at least a cavity and a refrigeration circuit including an evaporator and a compressor, comprising the step of measuring the relative humidity level inside the cavity, measuring the temperature of the evaporator and feeding the above measured values to a control algorithm capable of driving the refrigeration circuit in order to maintain substantially constant the average level of relative humidity and corresponding to a set value.

### SUMMARY OF THE INVENTION

Embodiments of the present invention seek to solve at least one of the problems existing in the related art to at least some extent. Thus, a first object of the present invention is to provide a method of controlling humidity in a refrigerating chamber of a refrigerator.

A second object of the present invention is to provide a refrigerator having a low cost of humidification, controllable humidification modes and a high moisture preservation function.

Embodiments of the present invention provide a method of controlling humidity in a refrigerating chamber of a refrigerator is provided, the refrigerating chamber has a high moisture preservation mode and a normal moisture preservation mode, and method comprising steps of: judging a moisture preservation mode in which the refrigerating chamber being operated,
detecting a temperature of the refrigerating chamber and comparing the detected temperature of the refrigerating chamber with a first predetermined temperature, when the refrigerating chamber being operated in the high moisture preservation mode,
operating a compressor and a fan of the refrigerator to cool the refrigerating chamber, when the temperature of the refrigerating chamber being higher than or equal to the first predetermined temperature,
stopping the compressor, continuously operating the fan and defrosting an evaporator of the refrigerator, so as to humidify the refrigerating chamber via the fan by using a defrostation water of the evaporator, when the temperature of the refrigerating chamber being lower than or equal to a second predetermined temperature,
detecting a temperature of the evaporator,
stopping the fan and defrostation of the evaporator so as to stop humidifying the refrigerating chamber with the defrostation water, when the detected temperature of the evaporator being higher than or equal to a third predetermined temperature;
detecting the temperature of the refrigerating chamber and comparing the detected temperature of the refrigerating chamber with the first predetermined temperature, when the refrigerating chamber being operated in the normal moisture preservation mode,
operating the compressor and the fan of the refrigerator to cool the refrigerating chamber, when the temperature of the refrigerating chamber being higher than or equal to the first predetermined temperature,
stopping the compressor and the fan when the temperature of the refrigerating chamber being lower than or equal to the second predetermined temperature,
the first predetermined temperature is higher than the second predetermined temperature, and the third predetermined temperature being higher than or equal to 0°C.

With the method according to embodiments of the present invention, the compressor and the fan are controlled to operate according to the moisture preservation mode selected by users, thus reducing the energy consumption, and satisfying the requirements for different humidity of the refrigerating chamber. In the high moisture preservation mode, the humidity in the refrigerating chamber may be maintained at a high level, and in the normal moisture preservation mode, the humidity in the refrigerating chamber may be maintained at a low level.

Moreover, the method according to embodiments of the present invention is simple, easy to implement and low in the cost of humidity control, and may be applicable to the refrigerator in the related art without complex structure modifications. In a preferred embodiment, the third predetermined temperature is 3°C.

Embodiments of the present invention provide a refrigerator, the refrigerator comprises:
a cabinet defining a refrigerating chamber and an air channel therein, the air channel defining an air outlet and an air inlet located below the air outlet, and the air channel being communicated with the refrigerating chamber via the air outlet and the air inlet;
a door pivotally mounted on the cabinet for opening and closing the refrigerating chamber;
a compressor disposed in a compressor compartment which is formed at a bottom of the cabinet;
an evaporator disposed in the air channel for cooling the refrigerating chamber;
a fan disposed in the air channel for transporting a cooling air of the evaporator into the refrigerating chamber via the air outlet;
a first temperature sensor for detecting a temperature of the refrigerating chamber;
a second temperature sensor for detecting a temperature of the evaporator;
a mode selecting device switching the refrigerating chamber between a high moisture preservation mode and a normal moisture preservation mode; and
a controller configured to,
connect with the first temperature sensor, the second temperature sensor, the compressor, the fan and the mode selecting device respectively,
operate the compressor and the fan to cool the refrigerating chamber when the refrigerating is operated in the high moisture preservation mode and the temperature of the refrigerating chamber is higher than or equal to a first predetermined temperature,
stop the compressor, continuously operate the fan and defrost the evaporator so as to humidify the refrigerating chamber via the fan by using the defrostation water of the evaporator, when the temperature of the refrigerating chamber is lower than or equal to the second predetermined temperature,
stop the fan and defrostation of the evaporator when the temperature of the evaporator is higher than or equal to a third predetermined temperature ,
operate the compressor and the fan to cool the refrigerating chamber, when the refrigerating chamber is operated in the normal moisture preservation mode and the temperature of the refrigerating chamber is higher than or equal to the first predetermined temperature,
stop the compressor and the fan when the temperature of the refrigerating chamber is lower than or equal to the second predetermined temperature,
the first predetermined temperature is greater than the second predetermined temperature, and the third predetermined temperature is greater than or equal to 0 °C.

With the refrigerator according to embodiments of the present invention, users may select a corresponding moisture preservation mode according to actual needs, thus satisfying the needs of different humidity in the refrigerating chamber. Moreover, the refrigerator according to the present invention is easy to embody and low in energy consumption.

In a preferred embodiment, the evaporator has a wedged cross-section, and a width of a lower end of the evaporator is smaller than that of an upper end of the evaporator, and a portion of the air channel for housing the evaporator has a shape adapted to the evaporator.

In a preferred embodiment, the lower end of the evaporator is adjacent to the air inlet of the air channel, and the upper of the evaporator is adjacent to the air outlet of the air channel.

In a preferred embodiment, a water absorbing member is disposed below the evaporator.

In a preferred embodiment, the water absorbing member is fabricated by porous filtering silicon membrane or porous composite fiber.

In a preferred embodiment, the mode selecting device is a mode selecting button disposed on the cabinet or door.

In a preferred embodiment, the fan is a box axial-flow fan, and a free end of a blade of the fan is integrally provided with a defrosting tip.

In a preferred embodiment, a rotating shaft of the fan is disposed at a predetermined angle with the horizontal plane.

In a preferred embodiment, the predetermined angle between the rotating shaft of the fan and the horizontal plane is 25 degree.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

These and other aspects and advantages of embodiments of the present invention will become apparent and more readily appreciated from the following descriptions made with reference to the accompanying drawings, in which:
Fig. 1 is a schematic view of the refrigerator according to embodiments of the present invention;
Fig. 2 is a schematic view of an evaporator of the refrigerator according to a preferred embodiment;
Fig. 3 is schematic view of a display and control panel of the refrigerator according to a preferred embodiment;
Fig. 4 is a schematic view of a fan of the refrigerator according to a preferred embodiment;
Fig. 5 is a curve illustrating operations of the fan and compressor of the refrigerator according to embodiments of the present invention;
Fig. 6 is a flow chart of a method of controlling humidity in a refrigerating chamber of the refrigerator according to embodiments of the present invention;
Fig. 7 is a schematic view illustrating the humidity in the refrigerating chamber and the input power of the method of controlling humidity according to the embodiments of the present invention, in which the high moisture preservation mode is selected.

### DETAILED DESCRIPTION OF THE EMBODIMENT(S)

Reference will be made in detail to embodiments of the present invention. The embodiments described herein with reference to drawings are explanatory, illustrative, and used to generally understand the present invention. The same or similar elements and the elements having same or similar functions are denoted by like reference numerals throughout the descriptions.

In the specification, unless specified or limited otherwise, relative terms such as "central", "longitudinal", "lateral", "front", "rear", "right", "left", "inner", "outer", "lower", "upper", "horizontal", "vertical", "above", "below", "up", "top", "bottom" as well as derivative thereof (e.g., "horizontally", "downwardly", "upwardly", etc.) should be construed to refer to the orientation as then described or as shown in the drawings under discussion. These relative terms are for convenience of description and do not require that the present invention be constructed or operated in a particular orientation.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The refrigerator according to embodiments of the present invention will be described in the following with reference to drawings.

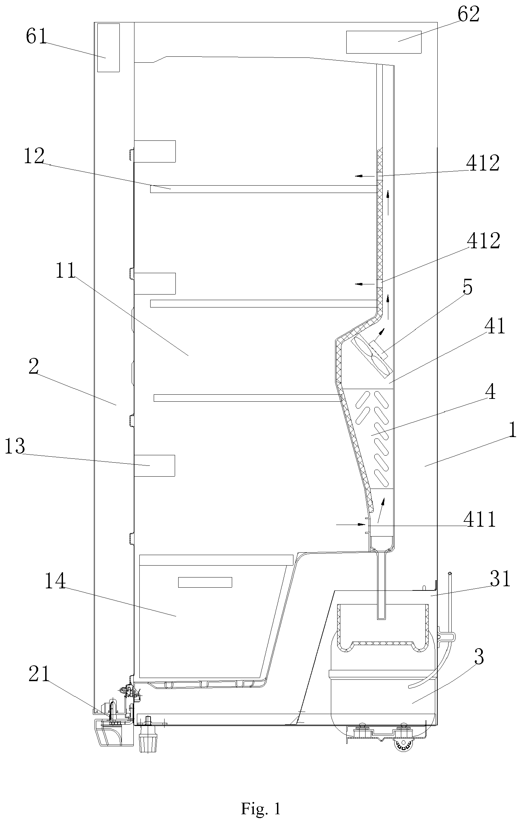

As shown in Fig. 1, the refrigerator according to embodiments of the present invention includes: a cabinet 1, a door 2, a compressor 3, an evaporator 4, a fan 5, a first temperature sensor (not shown), a second temperature sensor (not shown), a mode selecting device 61 and a controller 62.

More particularly, the cabinet 1 defines a refrigerating chamber 11 and an air channel 41 therein, the air channel 41 has an air outlet 412 and an air inlet 411 located below the air outlet 412, and the air channel 41 is communicated with the refrigerating chamber 11 via the air outlet 412 and the air inlet 411. Other members such as a glass shelf 12, a door tray 13 and a fruit and vegetable box 14 may be disposed in the refrigerating chamber 11.

The door 2 is pivotally mounted on the cabinet 1 for opening and closing the refrigerating chamber 11, and may be connected with the cabinet 1 via a hinge 21. The compressor 3 may be disposed in a compressor compartment 31 formed at a bottom of the cabinet 1. The evaporator 4 may be disposed in the air channel 41 for cooling the air, thereby the refrigerating chamber 11. The fan 5 is disposed in the air channel 41 for transporting the air cooled by the evaporator 4 into the refrigerating chamber 11 via the air outlet 412, thus cooling the refrigerating chamber 11. The first temperature sensor (not shown) may be disposed in the refrigerating chamber 11 for detecting the temperature of the refrigerating chamber. The second temperature sensor (not shown) may be disposed on the evaporator 4 for detecting the temperature of evaporator 4.

The mode selecting device 61 is used to switch the refrigerating chamber 11 between a high moisture preservation mode and a normal moisture preservation mode, in other words, the mode selecting device 61 may be actuated by a user to switch the refrigerating chamber 11 to the high moisture preservation mode or the normal moisture preservation mode.

The controller 62 is connected with the first temperature sensor, the second temperature sensor, the compressor 3, the fan 4 and the mode selecting device 61 respectively.

If the moisture preservation mode of the refrigerating chamber 11 is switched to the high moisture preservation mode by the mode selecting device 61, when the temperature of the refrigerating chamber 11 is higher than or equal to a first predetermined temperature Trk, the controller 62 operates the compressor 3 and the fan 5 of the refrigerator to cool the refrigerating chamber 11.

When the temperature of the refrigerating chamber 11 is lower than or equal to a second predetermined temperature Trt, the controller 62 stops the compressor 4 and continuously operates the fan 5, i.e., the compressor 3 is stopped from operating and the fan 5 is kept operating, at the same time, the controller 62 controls the evaporator 4 to defrost, thus transporting the defrostation water of the evaporator 4 into the refrigerating chamber 11 via the fan 5 to humidify the refrigerating chamber 11.

Because the defrostation water is transported into the refrigerating chamber 11 via the fan 5, the humidity of the refrigerating chamber 11 is increased, i.e., the refrigerating chamber is in the high moisture preservation mode.

When the detected temperature of the evaporator is higher than or equal to a third predetermined temperature Trq, the controller 62 stops the fan 5 and the defrostation of the evaporator 4.

The defrostation of the evaporator 4 may be implemented in any way, for example, an electric heating wire controlled by the controller 62 may be used to defrost the evaporator 4.

If the moisture preservation mode of the refrigerating chamber 11 is switched to the normal moisture preservation mode by the mode selecting device 61, when the temperature of the refrigerating chamber 11 is higher than or equal to the first predetermined temperature Trk, the controller 62 operates the compressor 3 and the fan 5 of the refrigerator to cool the refrigerating chamber 11.

When the temperature of the refrigerating chamber 11 is lower than or equal to the second predetermined temperature Trt, the controller 62 stops the compressor 3 and the fan 5.

In the normal moisture preservation mode, because no defrostation is performed with the evaporator 4, that is, no defrostation water is transported into the refrigerating chamber 11 by the fan 5, thus the current humidity in the refrigerating chamber 11 is lower than that in the high moisture preservation mode.

With the refrigerator according to the embodiments of the present invention, in the high moisture preservation mode, the average humidity in the refrigerating chamber 11 may be more than 82% and the highest humidity may be 85%, thus meeting the need of high moisture preservation in the refrigerating chamber 11.

In embodiments of the present invention, the first predetermined temperature Trk is higher than the second predetermined temperature Trt, and the third predetermined temperature Trq is higher than or equal to 0 °C.

With the refrigerator according to the embodiments of the present invention, users may select the moisture preservation mode of the refrigerating chamber 11 by the mode selecting device 61, and the controller 62 switches the refrigerating chamber 11 between the high moisture preservation mode and the normal moisture preservation mode according to the selection of the users, thus meeting the requirements for the different humidity in the refrigerating chamber 11, i.e. the humidity in the refrigerating chamber 11 may be maintained at a high level when the high moisture preservation mode is selected, and at a relatively low level when the normal moisture preservation mode is selected.

Moreover, the refrigerator according to the embodiment of the present invention is easy to manufactured, for example may be achieved by modifying the refrigerator in the related art without complex structure modifications, thus the cost is low.

In a preferred embodiment, the third predetermined temperature may be 3 °C. Therefore, the defrostation time of the evaporator 4 and the humidification time of the refrigerating chamber 11 may be prolonged. Those skilled in the art will appreciate that the users may adjust the third predetermined temperature Trq, so as to meet of the requirements for the humidity in the refrigerating chamber.

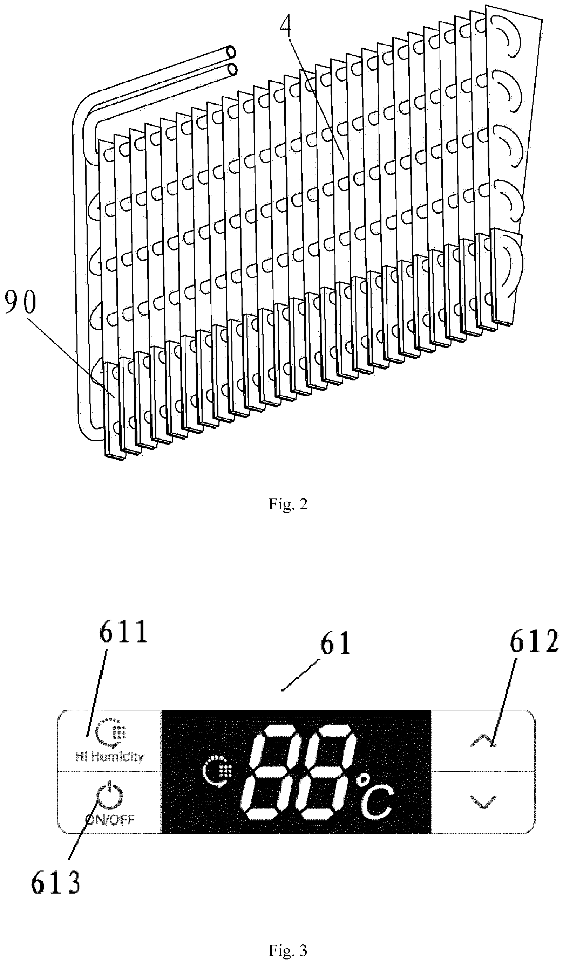

As shown in Figs. 1 and 2, in a preferred embodiment of the present invention, the evaporator 4 has a wedged cross-section (for example, the evaporator 4 may has a triangular or trapezoidal cross-section), and a width of a lower end of the evaporator 4 is smaller than that of an upper end of the evaporator 4. A portion of the air channel 41 for housing the evaporator 4 has a shape adapted to the evaporator 4, i.e., a size of the upper end of the portion of the air channel 41 for housing the evaporator 4 is greater than that of the lower end of the portion of the air channel 41 for housing the evaporator 4.

By using the wedged evaporator 4 to cool the refrigerating chamber 11, during defrostation of the evaporator 4, more and more water on the surface of the fins of the evaporator 4 will be gathered at the lower end of the evaporator 4 under an action of gravity. The water evaporation is closely related to a wind speed across the water, that is, if the total volume of wind is constant, the wind at a part of the air channel 41 having a smaller cross-section will has a higher speed. As the width of the portion of the air channel 41 for housing the evaporator 4 is adapted to that of the evaporator 4, thus the efficiency of evaporating the defrostation water by the evaporator 4 is improved, and the effect of moisture preservation is strengthened without increasing noise which is caused by increasing the speed of the fan 5 to achieve the moisture preservation.

As shown in Fig. 1 and Fig. 2, in a preferred embodiment, the lower end of the evaporator 4 is adjacent to the air inlet 411 of the air channel 41 and the upper end of the evaporator 4 is adjacent to the air outlet 412 of the air channel 41. Thus, the wind enters into the air channel 41 via the lower end of the air channel 41, then enters into the refrigerating chamber 11 via the upper end of the air channel 41 after passing through the evaporator 4.

Because of the smaller width of the lower end of the evaporator 4, the speed of the wind flowing across the lower end of the evaporator 4 is increased, which may accelerate the water evaporation at the lower end of the evaporator 4. Thus, under a condition that a rotation speed of the fan 5 is constant, the wind speed at the air inlet 411 may be increased and the effect of moisture preservation may be further improved, without increasing the rotation speed of the fan 5.

As shown in Fig. 2, in a preferred embodiment, a water absorbing member 90 is disposed below the evaporator 4. The water absorbing member 90 may collect and store the defrostation water from the evaporator 4, thus avoiding loss of the water in cabinet 1. Furthermore, the water absorbing member 90 may be fabricated by porous filtering silicon membrane or porous composite fiber. Therefore, when the fan 5 is operated in the high moisture preservation mode, the water absorbing member 90 may increase an effective evaporation area of the water and improve the effect of moisture preservation by means of the porous structure thereof.

As shown in Fig. 3, in a preferred embodiment, the mode selecting device 61 is a mode selecting button 611 disposed on the cabinet 1 or the door 2, which facilities the selection of the moisture preservation mode of the refrigerating chamber 11.

The mode selecting device 61 may be integrated with the display and control panel on which an ON-OFF button 613 for switching the refrigerator on or off and a temperature adjustment button 612 are disposed. Therefore, it is easy to turn on or turn off the refrigerator and control the temperature of the refrigerating chamber 11.

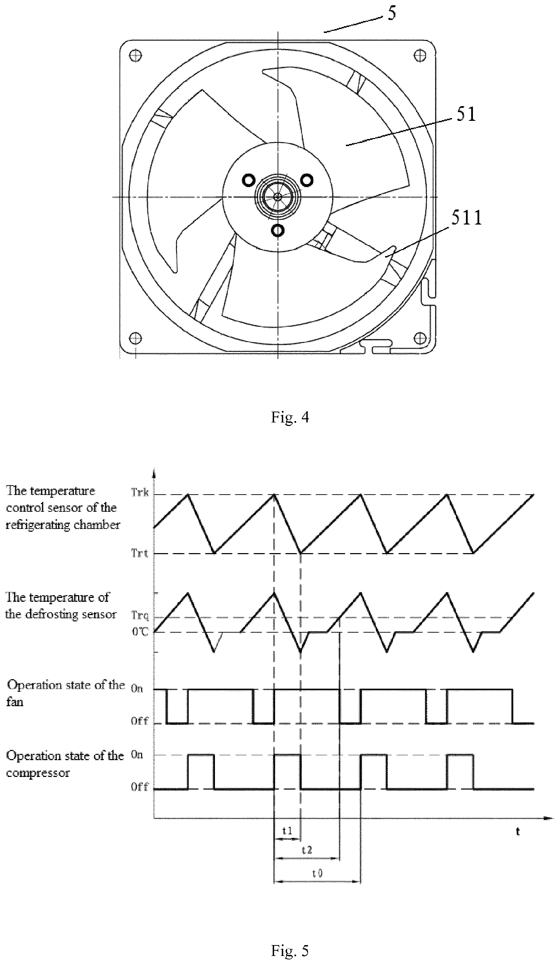

As shown in Fig. 4, in a preferred embodiment, the fan 5 may be a box axial-flow fan, and a free end of a blade 51 of the fan 5 is integrally provided with a defrosting tip 511, thus avoiding frosting on the blade 51 of the fan 5, thus improving the operation efficiency of the fan 5.

As shown in Fig. 1, in a preferred embodiment, a rotating shaft of the fan 5 is disposed at a predetermined angle with the horizontal plane. For example, the fan 5 may be obliquely disposed at the upper end of the evaporator 4, thus reducing damage to a motor (not shown) of the fan 5 caused by the water gathered on the fan 5.

In a preferred embodiment, the predetermined angle between the rotating shaft of the fan and the horizontal plane may be 25 degree, which facilities the water on the fan 5, particularly on the blade 51, to drop, and avoids damage to the motor of the fan caused by water flowing into the motor directly.

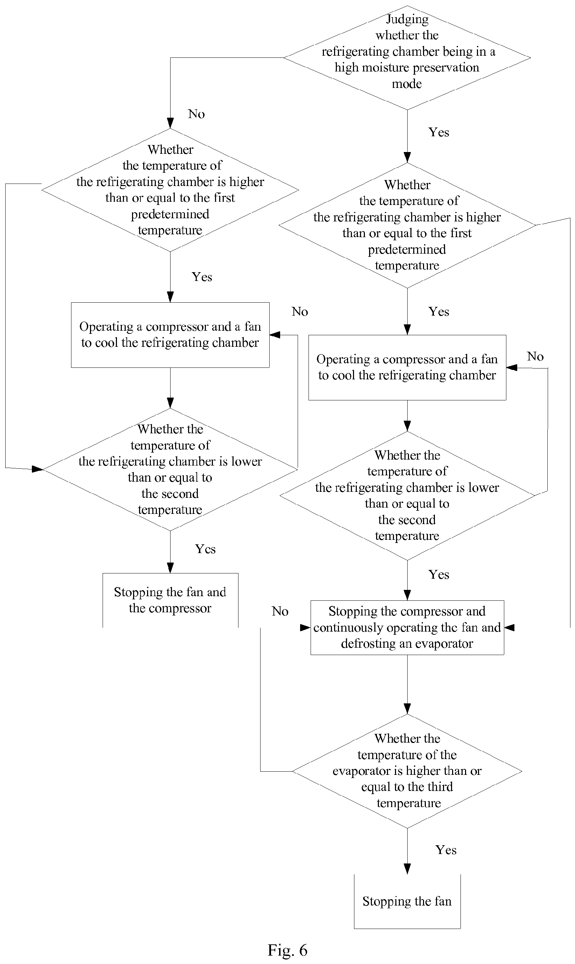

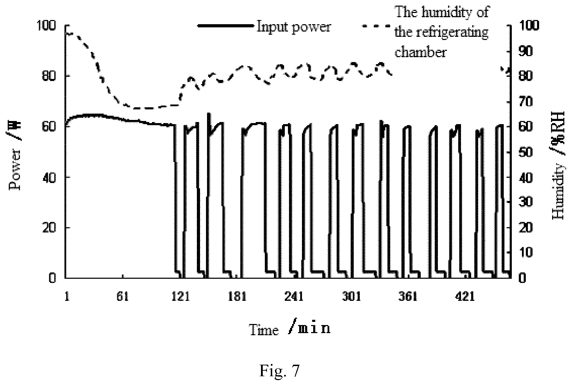

The method of controlling humidity in a refrigerating chamber of a refrigerator according to embodiments of the present invention will be described in the following with reference to Figs. 5-7.

As stated above, according to the invention, the refrigerating chamber 11 has the high moisture preservation mode and the normal moisture preservation mode, and the method includes steps of:
judging the moisture preservation mode in which the refrigerating chamber is operated. For example, the controller 62 judges the moisture preservation mode according to a command which is input via the mode selecting device 61.

When the refrigerating chamber 11 is in the high moisture preservation mode (that is, the high moisture preservation mode is selected), the controller 62 controls the first temperature sensor to detect the temperature of the refrigerating chamber 11, then compares the detected temperature of the refrigerating chamber 11 with the first predetermined temperature Trk.

When the temperature of the refrigerating chamber 11 is higher than or equal to the first predetermined temperature Trk, the controller 62 controls the compressor 3 and the fan 5 of the refrigerator to operate, so as to cool the refrigerating chamber 11.

When the temperature of the refrigerating chamber 11 is lower than or equal to the second predetermined temperature Trt, the controller 62 stops the compressor 3 and continuously operates the fan 5 (stopping the compressor 3 from operation and keeping the fan 5 operating), and defrosts the evaporator of the refrigerator, so as to humidify the refrigerating chamber 11 via the fan 5 by using the defrostation water of the evaporator 4. Thus, the high humidity in the refrigerating chamber 11 is achieved.

The controller 62 controls the second temperature sensor to detect the temperature of the evaporator 4. When the detected temperature of the evaporator 4 is higher than or equal to the third predetermined temperature Trq, the controller 62 stops the fan 5 and defrostation of the evaporator 4 so as to stop humidifying the refrigerating chamber 11 with the defrostation water of the evaporator 4.

When the refrigerating chamber 11 is in the normal moisture preservation mode, the controller 62 controls the first temperature sensor to detect the temperature of the refrigerating chamber 11, then compares the detected temperature of the refrigerating chamber 11 with the first predetermined temperature Trk.

When the temperature of the refrigerating chamber 11 is higher than or equal to the first predetermined temperature Trk, the controller 62 controls the compressor 3 and the fan 5 of the refrigerator to operate, so as to cool the refrigerating chamber 11.

When the temperature of the refrigerating chamber is lower than or equal to a second predetermined temperature Trt, the controller 62 stops both of the compressor 3 and the fan 5.

According to the invention, the first predetermined temperature is higher than the second predetermined temperature, and the third predetermined temperature is higher than or equal to 0°C.

According to the invention, with the method of controlling humidity in a refrigerating chamber of the refrigerator, the operations of the compressor and the fan and the defrostation of the evaporator are controlled according to actual needs, thus providing different humidity in the refrigerating chamber. In addition, the humidity control method is easy to be performed, and low in cost and energy consumption.

In a preferred embodiment, the third predetermined temperature Trq is 3 °C. Those skilled in the art will appreciate that the fan 5 may be controlled via two schemes in the normal moisture preservation mode:
The first scheme is that the fan 5 and the compressor 3 are operated synchronously, i.e., when the compressor 3 is operated, the fan 5 is operated too, when the compressor 3 is stopped, the fan 5 is stopped as well.

The second scheme is that the fan 5 and the compressor 3 are operated asynchronously, i.e., the fan 5 has been operated for a period of time (general 1-5 minutes) before compressor 3 starts to operate; or the fan 5 starts to operate after the compressor 3 has been operated for a period of time(general 1-5 minutes); the fan 5 has been stopped for a period of time (general 1-5 minutes) before the compressor 3 stops, or the fan 5 stops after the compressor 3 has been stopped for a period of time(general 1-5 minutes).

Because the evaporator 4 cools the air during the operation of the compressor 3, thus the humidity in the refrigerating chamber 11 is decreased continuously. Because the fan 5 is operated for a short period of time after the compressor 3 is stopped, the temperatures at every positions on the whole surface of the evaporator 4 are kept at or below 0°C and the frost is not melted yet, thus the humidity in the refrigerating chamber 11 is increased slightly.

In the normal moisture preservation mode, the highest humidity in the refrigerating chamber 11 is generally no more than 65% RH, and the average humidity is maintained at about 50% RH or less. When the users do not wish that the refrigerator is operated in the high moisture preservation mode, the refrigerator is switched to the normal moisture preservation mode, so as to reduce the humidity in the refrigerating chamber.

## Claims

1. A method of controlling humidity in a refrigerating chamber of a refrigerator, the refrigerating chamber (11) having a high moisture preservation mode and a normal moisture preservation mode **characterized in that**, the method comprises steps of:
judging a moisture preservation mode in which the refrigerating chamber (11) being operated,
detecting a temperature of the refrigerating chamber (11) and comparing the detected temperature of the refrigerating chamber (11) with a first predetermined temperature, when the refrigerating chamber (11) being operated in the high moisture preservation mode,
operating a compressor (3) and a fan (5) of the refrigerator to cool the refrigerating chamber (11), when the temperature of the refrigerating chamber (11) being higher than or equal to the first predetermined temperature,
stopping the compressor (3), continuously operating the fan (5) and defrosting an evaporator (4) of the refrigerator, so as to humidify the refrigerating chamber (11) via the fan (5) by using a defrostation water of the evaporator (4), when the temperature of the refrigerating chamber (11) being lower than or equal to a second predetermined temperature,
detecting a temperature of the evaporator (4),
stopping the fan (5) and defrostation of the evaporator (4) so as to stop humidifying the refrigerating chamber (11) with the defrostation water, when the detected temperature of the evaporator (4) being higher than or equal to a third predetermined temperature;
detecting the temperature of the refrigerating chamber (11) and comparing the detected temperature of the refrigerating chamber (11) with the first predetermined temperature, when the refrigerating chamber (11) being operated in the normal moisture preservation mode,
operating the compressor (3) and the fan (5) of the refrigerator to cool the refrigerating chamber (11), when the temperature of the refrigerating chamber (11) being higher than or equal to the first predetermined temperature,
stopping the compressor (3) and the fan (5) when the temperature of the refrigerating chamber (11) being lower than or equal to the second predetermined temperature,
wherein the first predetermined temperature is higher than the second predetermined temperature, and the third predetermined temperature being higher than or equal to 0°C.

2. The method according to claim 1, wherein the third predetermined temperature is 3 °C.

3. A refrigerator, comprising:
a cabinet (1) defining a refrigerating chamber (11) and an air channel (41) therein, the air channel (41) defining an air outlet (412) and an air inlet (411) located below the air outlet (412), and the air channel (41) being communicated with the refrigerating chamber (11) via the air outlet (412) and the air inlet (411);
a door (2) pivotally mounted on the cabinet (1) for opening and closing the refrigerating chamber (11);
a compressor (3) disposed in a compressor compartment (31) which is formed at a bottom of the cabinet (1);
an evaporator (4) disposed in the air channel (41) for cooling the refrigerating chamber (11);
a fan (5) disposed in the air channel (41) for transporting a cooling air of the evaporator (4) into the refrigerating chamber (11) via the air outlet (412);
a first temperature sensor for detecting a temperature of the refrigerating chamber (11);
a second temperature sensor for detecting a temperature of the evaporator (4);
a mode selecting device switching the refrigerating chamber (11) between a high moisture preservation mode and a normal moisture preservation mode; **characterized in that** the refrigerator further comprises
a controller (62) configured to,
connect with the first temperature sensor, the second temperature sensor, the compressor (3), the fan (5) and the mode selecting device (61) respectively,
operate the compressor (3) and the fan (5) to cool the refrigerating chamber (11) when the refrigerating is operated in the high moisture preservation mode and the temperature of the refrigerating chamber is higher than or equal to a first predetermined temperature,
stop the compressor (3), continuously operate the fan (5) and defrost the evaporator (4) so as to humidify the refrigerating chamber (11) via the fan (5) by using the defrostation water of the evaporator (4), when the temperature of the refrigerating chamber (11) is lower than or equal to the second predetermined temperature,
stop the fan (5) and defrostation of the evaporator (4) when the temperature of the evaporator (4) is higher than or equal to a third predetermined temperature,
operate the compressor (3) and the fan (5) to cool the refrigerating chamber (11), when the refrigerating chamber (11) is operated in the normal moisture preservation mode and the temperature of the refrigerating chamber (11) is higher than or equal to the first predetermined temperature, and
stop the compressor (3) and the fan (5) when the temperature of the refrigerating chamber (11) is lower than or equal to the second predetermined temperature,
wherein the first predetermined temperature is greater than the second predetermined temperature, and the third predetermined temperature is greater than or equal to 0 °C.

4. The refrigerator according to claim 3, wherein the evaporator (4) has a wedged cross-section, and a width of a lower end of the evaporator (4) is smaller than that of an upper end of the evaporator (4), and a portion of the air channel (41) for housing the evaporator (4) has a shape adapted to the evaporator (4).

5. The refrigerator according to claim 3 or 4, wherein the lower end of the evaporator (4) is adjacent to the air inlet (411) of the air channel (41), and the upper of the evaporator (4) is adjacent to the air outlet (412) of the air channel (41).

6. The refrigerator according to any one of claims 3-5, wherein a water absorbing member (90) is disposed below the evaporator (4).

7. The refrigerator according to claim 6, wherein the water absorbing member (90) is fabricated by porous filtering silicon membrane or porous composite fiber.

8. The refrigerator according to any one of claims 3-7, wherein the mode selecting device (61) is a mode selecting button disposed on the cabinet (1) or door (2).

9. The refrigerator according to any one of claims 3-8, wherein the fan (5) is a box axial-flow fan, and a free end of a blade (51) of the fan (5) is integrally provided with a defrosting tip (511).

10. The refrigerator according to any one of claims 3-9, wherein a rotating shaft of the fan (5) is disposed at a predetermined angle with the horizontal plane.

11. The refrigerator according to claim 10, wherein the predetermined angle between the rotating shaft of the fan (5) and the horizontal plane is 25 degree.

## Patentansprüche

1. Verfahren zum Steuern der Feuchtigkeit in einer Kühlkammer eines Kühlschranks, wobei die Kühlkammer (11) einen Modus mit hoher Feuchtigkeits-Konservierung und einen Modus mit normaler Feuchtigkeits-Konservierung aufweist, **dadurch gekennzeichnet, dass** das Verfahren die Schritte umfasst:
Beurteilen eines Feuchtigkeits-Konservierungs-Modus, in dem die Kühlkammer (11) betrieben wird,
Erfassen einer Temperatur der Kühlkammer (11) und Vergleichen der erfassten Temperatur der Kühlkammer (11) mit einer ersten vorbestimmten Temperatur, wenn die Kühlkammer (11) im Modus mit hoher Feuchtigkeits-Konservierung betrieben wird,
Betreiben eines Verdichters (3) und eines Lüfters (5) des Kühlschranks zum Kühlen der Kühlkammer (11), wenn die Temperatur der Kühlkammer (11) höher als oder gleich der ersten vorbestimmten Temperatur ist,
Anhalten des Verdichters (3), kontinuierliches Betreiben des Lüfters (5) und Abtauen eines Verdampfers (4) des Kühlschranks, um die Kühlkammer (11) über den Lüfter (5) unter Verwendung eines Abtauwassers des Verdampfers (4) zu befeuchten, wenn die Temperatur der Kühlkammer (11) niedriger als oder gleich einer zweiten vorbestimmten Temperatur ist,
Erfassen einer Temperatur des Verdampfers (4),
Anhalten des Lüfters (5) und Abtauen des Verdampfers (4), um die Befeuchtung der Kühlkammer (11) mit dem Abtauwasser zu stoppen, wenn die erfasste Temperatur des Verdampfers (4) höher als oder gleich einer dritten vorbestimmten Temperatur ist;
Erfassen der Temperatur der Kühlkammer (11) und Vergleichen der erfassten Temperatur der Kühlkammer (11) mit der ersten vorbestimmten Temperatur, wenn die Kühlkammer (11) im normalen Feuchtigkeits-Konservierungs-Modus betrieben wird,
Betreiben des Verdichters (3) und des Lüfters (5) des Kühlschranks zum Kühlen der Kühlkammer (11), wenn die Temperatur der Kühlkammer (11) höher als oder gleich der ersten vorbestimmten Temperatur ist,
Anhalten des Verdichters (3) und des Lüfters (5), wenn die Temperatur der Kühlkammer (11) niedriger als oder gleich der zweiten vorbestimmten Temperatur ist,
wobei die erste vorbestimmte Temperatur höher als die zweite vorbestimmte Temperatur ist, und die dritte vorbestimmte Temperatur höher als oder gleich 0°C ist.

2. Verfahren nach Anspruch 1, wobei die dritte vorbestimmte Temperatur 3°C ist.

3. Kühlschrank, umfassend:
einen Schrank (1), der eine Kühlkammer (11) und einen Luftkanal (41) darin definiert, wobei der Luftkanal (41) einen Luftauslass (412) und einen Lufteinlass (411), der unterhalb des Luftauslasses (412) angeordnet ist, definiert und wobei der Luftkanal (41) mit der Kühlkammer (11) über den Luftauslass (412) und den Lufteinlass (411) verbunden ist;
eine Tür (2), die schwenkbar am Schrank (1) zum Öffnen und Schließen der Kühlkammer (11) angebracht ist;
einen Verdichter (3), der in einem Verdichterraum (31) angeordnet ist, der an einem Boden des Schrankes (1) ausgebildet ist;
einen Verdampfer (4), der im Luftkanal (41) zum Kühlen der Kühlkammer (11) angeordnet ist;
einen im Luftkanal (41) angeordneten Lüfter (5) zum Transportieren einer Kühlluft des Verdampfers (4) in die Kühlkammer (11) über den Luftauslass (412);
einen ersten Temperatursensor zum Erfassen einer Temperatur der Kühlkammer (11);
einen zweiten Temperatursensor zum Erfassen einer Temperatur des Verdampfers (4);
eine Modusauswahl-Vorrichtung, die die Kühlkammer (11) zwischen einem Modus mit hoher Feuchtigkeits-Konservierung und einem Modus mit normaler Feuchtigkeits-Konservierung umschaltet;
**dadurch gekennzeichnet, dass** der Kühlschrank weiterhin umfasst
eine Steuerung (62), die konfiguriert ist, um
mit dem ersten Temperatursensor, dem zweiten Temperatursensor, dem Verdichter (3), dem Lüfter (5) bzw. der Modusauswahl-Vorrichtung (61) zu verbinden,
den Verdichter (3) und den Lüfter (5) zum Kühlen der Kühlkammer (11) zu betreiben, wenn die Kühlung im Modus mit hoher Feuchtigkeits-Konservierung betrieben wird und die Temperatur der Kühlkammer höher als oder gleich einer ersten vorbestimmten Temperatur ist,
den Verdichter (3) anzuhalten, den Lüfter (5) kontinuierlich zu betreiben und den Verdampfer (4) abzutauen, um die Kühlkammer (11) über den Lüfter (5) unter Verwendung des Abtauwassers des Verdampfers (4) zu befeuchten, wenn die Temperatur der Kühlkammer (11) niedriger als oder gleich der zweiten vorbestimmten Temperatur ist,
den Ventilator (5) anzuhalten und den Verdampfer (4) abzutauen, wenn die Temperatur des Verdampfers (4) höher als oder gleich einer dritten vorbestimmten Temperatur ist,
den Verdichter (3) und den Lüfter (5) zum Kühlen der Kühlkammer (11) zu betreiben, wenn die Kühlkammer (11) im Modus mit normaler Feuchtigkeits-Konservierung betrieben wird und die Temperatur der Kühlkammer (11) höher als oder gleich der ersten vorbestimmten Temperatur ist, und
den Verdichter (3) und den Lüfter (5) anzuhalten, wenn die Temperatur der Kühlkammer (11) niedriger als oder gleich der zweiten vorbestimmten Temperatur ist,
wobei die erste vorbestimmte Temperatur größer als die zweite vorbestimmte Temperatur ist, und die dritte vorbestimmte Temperatur größer als oder gleich 0°C ist.

4. Kühlschrank nach Anspruch 3, wobei der Verdampfer (4) einen keilförmigen Querschnitt aufweist und eine Breite eines unteren Endes des Verdampfers (4) kleiner ist als die eines oberen Endes des Verdampfers (4), und ein Abschnitt des Luftkanals (41) zur Aufnahme des Verdampfers (4) eine an den Verdampfer (4) angepasste Form aufweist.

5. Kühlschrank nach Anspruch 3 oder 4, wobei das untere Ende des Verdampfers (4) an den Lufteinlass (411) des Luftkanals (41) angrenzt und das Obere des Verdampfers (4) an den Luftauslass (412) des Luftkanals (41) angrenzt.

6. Kühlschrank nach einem der Ansprüche 3-5, wobei ein wasserabsorbierendes Element (90) unterhalb des Verdampfers (4) angeordnet ist.

7. Kühlschrank nach Anspruch 6, wobei das wasserabsorbierende Element (90) aus einer porösen filtrierenden Silikonmembran oder einer porösen Verbundfaser hergestellt ist.

8. Kühlschrank nach einem der Ansprüche 3-7, wobei die Modusauswahl-Vorrichtung (61) eine Modusauswahltaste ist, die am Schrank (1) oder an der Tür (2) angeordnet ist.

9. Kühlschrank nach einem der Ansprüche 3-8, wobei der Lüfter (5) ein Kasten-Axial-Lüfter ist und ein freies Ende eines Flügels (51) des Lüfters (5) integral mit einer Abtauspitze (511) versehen ist.

10. Kühlschrank nach einem der Ansprüche 3-9, wobei eine rotierende Welle des Lüfters (5) in einem vorbestimmten Winkel mit der horizontalen Ebene angeordnet ist.

11. Kühlschrank nach Anspruch 10, wobei der vorbestimmte Winkel zwischen der rotierenden Welle des Lüfters (5) und der horizontalen Ebene 25 Grad beträgt.

## Revendications

1. Procédé de régulation de l'humidité dans une chambre frigorifique d'un réfrigérateur, la chambre frigorifique (11) présentant un mode de conservation à humidité élevée et un mode de conservation à humidité normale, **caractérisé en ce que** le procédé comprend les étapes qui consistent :
à juger dans quel mode de conservation d'humidité la chambre frigorifique (11) fonctionne,
à détecter une température de la chambre frigorifique (11) et à comparer la température détectée de la chambre frigorifique (11) à une première température prédéterminée, quand la chambre frigorifique (11) fonctionne dans le mode de conservation à humidité élevée,
à faire fonctionner un compresseur (3) et un ventilateur (5) du réfrigérateur pour refroidir la chambre frigorifique (11), quand la température de celle-ci est supérieure ou égale à la première température prédéterminée,
à arrêter le compresseur (3), à faire fonctionner le ventilateur (5) de manière continue et à dégivrer un évaporateur (4) du réfrigérateur de manière à humidifier ladite chambre frigorifique (11) par l'intermédiaire du ventilateur (5), en utilisant une eau de dégivrage de l'évaporateur (4) quand la température de la chambre frigorifique (11) est inférieure ou égale à une deuxième température prédéterminée,
à détecter une température de l'évaporateur (4),
à arrêter le ventilateur (5) et le dégivrage de l'évaporateur (4) de manière à arrêter l'humidification de la chambre frigorifique (11) avec l'eau de dégivrage quand la température détectée de l'évaporateur (4) est supérieure ou égale à une troisième température prédéterminée ;
à détecter la température de la chambre frigorifique (11) et à comparer la température détectée de celle-ci à la première température prédéterminée, quand la chambre frigorifique (11) fonctionne dans le mode de conservation à humidité normale,
à faire fonctionner le compresseur (3) et le ventilateur (5) du réfrigérateur pour refroidir la chambre frigorifique (11) quand la température de celle-ci est supérieure ou égale à la première température prédéterminée,
à arrêter le compresseur (3) et le ventilateur (5) quand la température de la chambre frigorifique (11) est inférieure ou égale à la deuxième température prédéterminée,
la première température prédéterminée étant supérieure à la deuxième température prédéterminée, et la troisième température prédéterminée étant supérieure ou égale à 0°C.

2. Procédé selon la revendication 1, selon lequel la troisième température prédéterminée est de 3°C.

3. Réfrigérateur comprenant :
une armoire (1) qui renferme une chambre frigorifique (11) et un conduit d'air (41), le conduit d'air (41) définissant une sortie d'air (412) et une entrée d'air (411) située sous la sortie d'air (412), et le conduit d'air (41) communiquant avec la chambre frigorifique (11) par l'intermédiaire de la sortie d'air (412) et de l'entrée d'air (411) ;
une porte (2) qui est montée pivotante sur l'armoire (1) pour ouvrir et fermer la chambre frigorifique (11) ;
un compresseur (3) qui est disposé dans un compartiment pour compresseur (31) formé en bas de l'armoire (1) ;
un évaporateur (4) qui est disposé dans le conduit d'air (41) pour refroidir la chambre frigorifique (11) ;
un ventilateur (5) qui est disposé dans le conduit d'air (41) pour transporter un air de refroidissement de l'évaporateur (4) et l'amener dans la chambre frigorifique (11) par la sortie d'air (412) ;
un premier capteur de température pour détecter une température de la chambre frigorifique (11) ;
un deuxième capteur de température pour détecter une température de l'évaporateur (4) ;
un dispositif de sélection de mode qui fait passer la chambre frigorifique (11) entre un mode de conservation à humidité élevée et un mode de conservation à humidité normale ;
**caractérisé en ce que** le réfrigérateur comprend également
un régulateur (62) conçu
pour être relié au premier capteur de température, au deuxième capteur de température, au compresseur (3), au ventilateur (5) et au dispositif de sélection de mode (61), respectivement,
pour faire fonctionner le compresseur (3) et le ventilateur (5) afin de refroidir la chambre frigorifique (11) quand la réfrigération fonctionne en mode de conservation à humidité élevée et que la température de la chambre frigorifique est supérieure ou égale à une première température prédéterminée,
pour arrêter le compresseur (3), faire fonctionner le ventilateur (5) de manière continue et dégivrer l'évaporateur (4) de manière à humidifier la chambre frigorifique (11) par l'intermédiaire du ventilateur (5) en utilisant l'eau de dégivrage de l'évaporateur (4), quand la température de la chambre frigorifique (11) est inférieure ou égale à la deuxième température prédéterminée,
pour arrêter le ventilateur (5) et le dégivrage de l'évaporateur (4) quand la température de ce dernier est supérieure ou égale à une troisième température prédéterminée,
pour faire fonctionner le compresseur (3) et le ventilateur (5) afin de refroidir la chambre frigorifique (11) quand celle-ci fonctionne en mode de conservation à humidité normale et que la température de ladite chambre frigorifique (11) est supérieure ou égale à la première température prédéterminée, et
pour arrêter le compresseur (3) et le ventilateur (5) quand la température de la chambre frigorifique (11) est inférieure ou égale à la deuxième température prédéterminée,
la première température prédéterminée étant supérieure à la deuxième température prédéterminée, et la troisième température prédéterminé étant supérieure ou égale à 0°C.

4. Réfrigérateur selon la revendication 3, dans lequel l'évaporateur (4) a une section transversale qui va en diminuant, une largeur de l'extrémité inférieure de l'évaporateur (4) est plus petite que celle de son extrémité supérieure, et une partie du conduit d'air (41) destinée à loger l'évaporateur (4) a une forme adaptée à l'évaporateur (4).

5. Réfrigérateur selon la revendication 3 ou 4, dans lequel l'extrémité inférieure de l'évaporateur (4) est voisine de l'entrée d'air (411) du conduit d'air (41), et l'extrémité supérieure de l'évaporateur (4) est voisine de la sortie d'air (412) du conduit d'air (41).

6. Réfrigérateur selon l'une quelconque des revendications 3 à 5, dans lequel un élément d'absorption d'eau (90) est disposé sous l'évaporateur (4).

7. Réfrigérateur selon la revendication 6, dans lequel l'élément d'absorption d'eau (90) est fabriqué grâce à une membrane en silicone filtrante poreuse ou une fibre composite poreuse.

8. Réfrigérateur selon l'une quelconque des revendications 3 à 7, dans lequel le dispositif de sélection de mode (61) est un bouton de sélection de mode disposé sur l'armoire (1) ou sur la porte (2).

9. Réfrigérateur selon l'une quelconque des revendications 3 à 8, dans lequel le ventilateur (5) est un ventilateur écoulement axial à boîtier, et une extrémité libre d'une pale (51) du ventilateur (5) est formée d'une seule pièce avec une pointe de dégivrage (511).

10. Réfrigérateur selon l'une quelconque des revendications 3 à 9, dans lequel un axe rotatif du ventilateur (5) est disposé à un angle déterminé, par rapport au plan horizontal.

11. Réfrigérateur selon la revendication 10, dans lequel l'angle prédéterminé entre l'axe de rotation du ventilateur (5) et le plan horizontal est de 25 degrés.
